Europäisches Patentamt

European Patent Office

Office européen des brevets

(19)

(11) Veröffentlichungsnummer: **0 018 529**

**A1**

(12) **EUROPÄISCHE PATENTANMELDUNG**

(21) Anmeldenummer: 80101976.1

(22) Anmeldetag: 12.04.80

(51) Int. Cl.³: **C 09 J 3/14**
C 09 D 3/727, C 08 F 279/02
C 08 F 2/46

(30) Priorität: 26.04.79 DE 2916909

(43) Veröffentlichungstag der Anmeldung:
12.11.80 Patentblatt 80'23

(84) Benannte Vertragsstaaten:
AT BE CH FR GB IT LI NL SE

(71) Anmelder: METZELER KAUTSCHUK GMBH
Westendstrasse 131
D-8000 München 2(DE)

(72) Erfinder: Menk, Hermann, Dr.
Prielweg 6
D-8990 Bodolz(DE)

(72) Erfinder: Hinteneder, Luise
Burgkmairstrasse 25
D-8000 München(DE)

(74) Vertreter: Michelis, Theodor, Dipl.-Ing.
Westendstrasse 131
D-8000 München 2(DE)

(54) Kalthärtbare lösungsmittelfreie Überzugsmasse.

(57) Zum Fixieren einer Beflockung aus Natur- oder Kunstfasern auf einem vulkanisierten oder unvulkanisierten synthetischen oder natürlichen Polymer ist eine kalthärtbare bzw. durch ionisierende Strahlung vernetzbare, lösungsmittelfreie Überzugsmasse, insbesondere Kleber, vorgesehen, die enthält oder besteht aus mindestens einem flüssigen Kohlenwasserstoffpolymeren, das Doppelbindungen aufweist (Komponente A), und/oder gegebenenfalls mindestens einem Polyaminderivat (Komponente B) und/oder gegebenenfalls mindestens einem reaktiven Verdünner (Komponente C) sowie gegebenenfalls üblichen Zusätzen.

EP 0 018 529 A1

Croydon Printing Company Ltd

METZELER KAUTSCHUK AG

8000 München 2

München, den 25.4.1979
Unser Zeichen: MK 210 P 79
Dr.H.

### Kalthärtbare lösungsmittelfreie Überzugsmasse

Die Erfindung betrifft eine kalthärtbare bzw. durch ionisierende Strahlung vernetzbare, lösungsmittelfreie Überzugsmasse, insbesondere einen Kleber zum Fixieren einer Beflockung aus Natur- oder Kunstfasern auf einem vulkanisierten oder unvulkanisierten synthetischen oder natürlichen Polymer oder Polymermischung.

Es ist häufig erforderlich, Gummiteile mit einer Überzugs- oder Klebstoffschicht zu versehen, um ihnen ein dekoratives Aussehen zu verleihen (wenn die Überzugsschicht pigmentiert ist), um sie gegen schädliche äußere Einflüsse, wie z.B. Feuchtigkeit oder Ozon, zu schützen, oder um andere Substrate daran zu fixieren, beispielsweise eine festsitzende Beflockung aufzubringen. Im allgemeinen handelt es sich bei den zu beschichtenden Gummiteilen um im Rahmen eines kontinuierlichen Verfahrens hergestellte Endlosteile, wie Profile oder Kalanderware, die beschichtet bzw. beflockt werden sollen. Dabei kann die Beschichtung nach zwei verschiedenen Methoden durchgeführt werden:

a) man stellt den Gummiartikel fertig vulkanisiert her und beschichtet ihn anschließend in einem weiteren Arbeitsgang oder

b) man trägt den Überzug (Lack) oder Kleber auf den Rohling auf, beflockt ihn gegebenenfalls und vulkanisiert anschließend, wobei gleichzeitig der Kleber gehärtet wird.

Für die Herstellung der Oberflächenüberzüge, insbesondere der Lack- und Klebstoffschichten, werden im allgemeinen Substanzen verwendet, die entweder fest oder hochviskos sind und sich damit für einen direkten Auftrag auf das zu beschichtende Gummisubstrat nicht eignen. Sie müssen deshalb in Lösung gebracht oder verdünnt werden, bis die gewünschte Viskosität erreicht ist, die den Auftrag in einer konstanten Schichtdicke ermöglicht. Das Beschichten selbst kann durch Auftragen mittels eines Pinsels, einer Rakel oder durch Aufsprühen oder auf irgendeine andere geeignete Weise erfolgen. Die gegebenenfalls anschließend an den Auftrag der Klebstoffschicht durchgeführte Beflockung kann unter Anwendung eines üblichen Beflockungsverfahrens, beispielsweise in einem elektrostatischen Feld, durchgeführt werden.

Bei den bisher für diesen Zweck verwendeten Überzugs- bzw. Klebstoffmassen mußten stets Lösungsmittel zur Einstellung der erforderlichen Viskosität verwendet werden, die gewisse Gefahren mit sich bringen. Einerseits sind bisher verwendete Lösungsmittel gesundheitsschädlich für die damit beschäftigten Personen, andererseits sind sie in der Regel brennbar bzw. ihre Dämpfe bilden mit Luft unter bestimmten Voraussetzungen explosive Gemische.

Da die bisher verwendeten Beschichtungs- bzw. Klebstoffmassen stets Lösungsmittel enthalten, mußten bei ihrer Verwendung erhöhte Temperaturen angewendet werden, um innerhalb einer technisch tragbaren Zeitspanne eine ausreichende Vernetzung bzw. Aushärtung der aufgebrachten Überzüge zu erzielen. Die dafür erforderliche Wärmeenergie trägt aber nicht unerheblich zu den Gestehungskosten der Endprodukte bei.

Aufgabe der Erfindung war es daher, eine Überzugsmasse, insbesondere eine Klebstoffmasse, zu entwickeln, die nicht nur lösungsmittelfrei, sondern auch kalthärtbar ist.

Es wurde nun gefunden, daß diese Aufgabe erfindungsgemäß gelöst werden kann mit einer kalthärtbaren bzw. durch ionisierende Strahlung vernetzbaren, lösungsmittelfreien Überzugsmasse, insbesondere einem Kleber zum Fixieren einer Beflockung aus Polyester- und/oder Polyamidfasern auf einer vulkanisierten oder unvulkanisierten synthetischen oder natürlichen Kautschukmischung, die (der) dadurch gekennzeichnet ist, daß sie (er) enthält oder besteht aus mindestens einem flüssigen Kohlenwasserstoffpolymeren, das Doppelbindungen aufweist (Komponente A), und/oder gegebenenfalls mindestens einem Polyaminderivat (Komponente B) und/oder gegebenenfalls mindestens einem reaktiven Verdünner (Komponente C) sowie gegebenenfalls üblichen Zusätzen.

Die erfindungsgemäße Überzugsmasse läßt sich durch ionisierende Strahlung, beispielsweise Elektronenstrahlung, schnell und vollständig ohne Wärmezufuhr von außen vernetzen und weist eine gute Haftung auf dem Gummisubstrat auf. Mit der erfindungsgemäßen Überzugsmasse lassen sich die verschiedensten Gummisubstrate auf technisch einfache Weise beschichten, wobei eine vorherige Aufrauhung der Oberfläche des Gummisubstrats, wie sie sonst üblich ist, bei Verwendung der erfindungsgemäßen Überzugsmasse nicht mehr erforderlich ist. Auch jede andere vorherige Oberflächenbehandlung, wie z.B. eine solche mit Lösungsmitteln, ist dadurch entbehrlich. Die erfindungsgemäße Überzugsmasse ist in der Lage, Gummiteile aus Naturkautschuk, SBR, CR und sogar aus EPDM im vulkanisierten wie auch im unvulkanisierten Zustand zu benetzen und sie haftet im vernetzten Zustand ausgezeichnet daran.

Die erfindungsgemäße Überzugsmasse stellt insbesondere einen
hervorragenden Kleber zum Fixieren einer Beflockung aus Poly-
ester- und/oder Polyamidfasern auf einer vulkanisierten oder
unvulkanisierten synthetischen oder natürlichen Kautschukmischung
dar.

Die erfindungsgemäße Überzugsmasse enthält die Komponenten A,
B und C in beliebigen Mischungsverhältnissen, wobei das Mischungsverhältnis in Abhängigkeit von den jeweils verwendeten spezifischen Komponenten so eingestellt wird, daß die gewünschte Viskosität erzielt wird, die bei Raumtemperatur vorzugsweise innerhalb
des Bereiches von 100 bis 5000 cP liegt. Selbstverständlich kann
die erfindungsgemäße Überzugsmasse neben einer oder mehreren der
oben genannten Komponenten A, B und C noch übliche Zusätze,
wie Detergentien zur Verbesserung der Benetzungseigenschaften,
inerte Füllstoffe und/oder Pigmente zur Erzielung optischer
Effekte und/oder auch weitere neutrale Stoffe, so weit sie die
Vernetzungsreaktion, die Haftung nicht beeinträchtigen und die
von außen auf den Überzug einwirkenden zerstörenden Kräfte und
Substanzen nicht begünstigen, enthalten.

Die erfindungsgemäße Überzugsmasse kann als fertige Mischung in
einer oder mehreren Schichten auf das zu beschichtende Gummisubstrat in geeigneter Weise aufgebracht werden, sie kann aber
auch in der Weise aufgebracht werden, daß zunächst die Komponente
A, gegebenenfalls in Mischung mit einem Anteil der Komponente C,
und danach die Komponente B, gegebenenfalls in Mischung mit dem
Rest der Komponente C, aufgebracht werden. Das Aufbringen der
Schichten kann durch Aufsprühen oder Aufstreichen erfolgen.

Die einzelnen Schichten können auf einen ausvulkanisierten
Formkörper aufgebracht und darauf dann vernetzt werden oder
sie können auf eine unvernetzte Rohmischung aufgebracht und
zusammen mit dieser vernetzt werden. Die letztere Verfahrensweise bietet den Vorteil, daß für die Vernetzung der Rohmischung
auf die Verwendung von Schwefel als Vulkanisationsmittel und/oder
die Verwendung eines Vulkanisationsbeschleunigers verzichtet
werden kann, wenn die Vulkanisation durch Elektronenstrahlen erfolgt.

Die erfindungsgemäße Überzugsmasse (darunter ist vorstehend und
nachstehend stets auch ein Kleber zu verstehen) kann aus der
Komponente A allein (gegebenenfalls mit üblichen Zusätzen), aus
den Komponenten A und B (gegebenenfalls mit üblichen Zusätzen),
aus den Komponenten A und B und C (gegebenenfalls mit üblichen
Zusätzen) oder aus den Komponenten B und C (gegebenenfalls mit
üblichen Zusätzen) bestehen.

Bei der in der erfindungsgemäßen Überzugsmasse verwendeten
Komponente A handelt es sich um einen oder mehrere flüssige
Kohlenwasserstoffpolymerisate oder -copolymerisate, die noch
Doppelbindungen aufweisen und eine ausreichende Affinität gegenüber der Oberfläche der Gummi- oder Rohmischung besitzen.
Vorzugsweise handelt es sich dabei um Butadien-und/oder Isopren-Homopolymerisate und/oder -Copolymerisate mit geeigneten
Vinylmonomeren, wie z.B. Styrol, Acrylnitril, Vinylacrylat und
Vinylmethacrylat, bei denen mind. 2 Doppelbindungen pro Molekül
epoxydiert und die Epoxidgruppen mit Acrylsäure oder Methacrylsäure umgesetzt worden sind. Sie benetzen außerordentlich
gut Vulkanisate oder auch unvulkanisiertes Gummi; dies gilt
auch dann, wenn die Eigenviskosität der Komponente A für die

Verarbeitung zu hoch und die aufgebrachte Schichtdicke zu stark ist, so daß sie mit einem reaktiven Verdünner verdünnt werden muß, um ihr die für die Beschichtung erforderliche Viskosität zu verleihen.

Beispiele für erfindungsgemäß verwendbare reaktive Verdünner (Komponente C) sind unpolymerisierte Mono- und/oder Polyvinyläther, Alkylhalogenalkylmono- und/oder -polyacrylate und -methacrylate und Gemische davon sowie Vinylacrylat oder Vinylmethacrylat, gegebenenfa im Gemisch mit den vorgenannten Verbindungen.

Als Komponente B kann in der erfindungsgemäßen Überzugsmasse mindest eine Verbindung aus der Gruppe der Acryl- und Methacrylamide, der All halogenalkylmono- und -polyamine, deren Aminogruppen vollständig oder teilweise acrylyliert oder methacrylyliert sind, sowie der Alkyl- und Halogenalkylverbindungen, die sowohl Acrylamid-, Methacrylamid-, Acrylester-, Methacrylester-, als auch Amin- und Hydroxylgruppen tragen, sowie der Acrylsäuremono-, Methacryl- säuremono- und -polyester, die auch teilweise verseift sein können, und Gemischen davon, enthalten sein.

Auch die Komponente B kann, falls ihre Viskosität für eine Be- schichtung zu hoch ist, durch mindestens einen der oben genannten reaktiven Verdünner auf eine Viskosität innerhalb des gewünschten Bereiches gebracht werden.

- 7 -

Patentansprüche

1. Kalthärtbare bzw. durch ionisierende Strahlung vernetzbare, lösungsmittelfreie Überzugsmasse, insbesondere Kleber
zum Fixieren einer Beflockung aus Natur- oder Kunstfasern
auf einem vulkanisierten oder unvulkanisierten synthetischen
oder natürlichen Polymer oder Polymermischung, d a d u r c h
g e k e n n z e i c h n e t , daß sie (er) enthält oder besteht aus mindestens einem flüssigen Kohlenwasserstoffpolymeren, das Doppelbindungen aufweist (Komponente A), und/oder gegebenenfalls
mindestens einem Polyaminderivat (Komponente B) und/oder
gegebenenfalls mindestens einem reaktiven Verdünner (Komponente C) sowie gegebenenfalls üblichen Zusätzen.

2. Überzugsmasse nach Anspruch 1, dadurch gekennzeichnet,
daß es sich bei der Komponente A um ein Butadien- und/oder
Isopren-Homopolymerisat und/oder -Copolymerisat mit einem
Vinylmonomeren handelt, das an mindestens zwei Doppelbindungen
pro Molekül epoxydiert und an diesen Epoxidgruppen mit Acrylsäure oder Methacrylsäure umgesetzt worden ist.

3. Überzugsmasse nach Anspruch 1 oder 2, dadurch gekennzeichnet, daß es sich bei der Komponente B um eine Verbindung
aus der Gruppe der Acryl- und Methacrylamide, der Alkylhalogenalkylmono- und -polyamine, deren Aminogruppen vollständig oder
teilweise acryly liert oder methacryly liert sind, der Alkyl- und
Halogenalkylverbindungen, die sowohl Acrylamid-, Methacrylamid-,

(MK 214 E 79)

Acrylester- und Methacrylestergruppen als auch Amin- und Hydroxylgruppen tragen, der Acryl- und Methacrylsäuremono- und polyester, die teilweise verseift sein können, sowie Gemischen davon handelt.

4. Überzugsmasse nach einem der Ansprüche 1 bis 3, dadurch gekennzeichnet, daß es sich bei der Komponente C um einen reaktiven Verdünner aus der Gruppe der Mono- und Polyvinyläther, der Alkylhalogenalkylmono- und -polyacrylate und -methacrylate, der Vinylacrylate und Vinylmethacrylate und Gemischen davon handelt.

5. Überzugsmasse nach einem der Ansprüche 1 bis 4, dadurch gekennzeichnet, daß sie als übliche Zusätze Detergentien, inerte Füllstoffe und/oder Pigmente enthält.

6. Überzugsmasse nach einem der Ansprüche 1 bis 5, dadurch gekennzeichnet, daß sie die Komponenten A, B und C in beliebigen Mischungsverhältnissen, vorzugsweise in einem solchen Mischungsverhältnis enthält, daß die gesamte Überzugsmasse bei Raumtemperatur eine Eigenviskosität von 100 bis 5000 cP aufweist.

7. Überzugsmasse nach einem der Ansprüche 1 bis 6, dadurch gekennzeichnet, daß sie durch ionisierende Strahlung vernetzbar bzw. härtbar ist.

00 8529

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| | <u>DE - A - 2 625 239</u> (NIPPON OIL)<br><br>* Seite 42, Anspruch 1; Seite 1, Zeilen 1-4 *<br><br>-- | 1 | C 09 J 3/14<br>C 09 D 3/727<br>C 08 F 279/02<br>2/46 |
| | <u>FR - A - 2 356 705</u> (DENKI KAGAKU <u>KOGYO</u>)<br><br>* Seite 24, Anspruch 1; Seite 1, Zeilen 1-3 *<br><br>-- | 1,3 | |
| | <u>FR - A - 2 347 424</u> (UNION CARBIDE)<br><br>* Seite 17, Anspruch 1; Seite 1, Zeile 29 bis zum Ende; Seite 3, Zeilen 11-13 *<br><br>----- | 1-4,7 | RECHERCHIERTE SACHGEBIETE (Int Cl )<br><br>C 09 J 3/14<br>C 09 D 3/727<br>C 08 F 2/46<br>20/20<br>120/20<br>20/54-<br>20/60<br>279/02<br>291/06<br>C 08 C 19/40 |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Grunden angeführtes Dokument

&: Mitglied der gleichen Patentfamilie, übereinstimmendes Dokument

Der vorliege   e Recherchenbericht wurde für alle Patentansprüche erstellt.

| Recherchenort | Abschlußdatum der Recherche | Prüfer |
|---|---|---|
| Den Haag | 17-07-1980 | GIRARD |

EPA form 1503.1 06.78